# EUROPEAN PATENT APPLICATION

(11) **EP 4 756 594 A1**
(43) Date of publication of application: **10.06.2026**
(21) Application number: 24894548.7
(22) Date of filing: 18.11.2024
(51) Int. Cl.: G06F 3/04842, G06F 3/0481, G06F 3/00, G06F 1/16, H02J 50/90, H02J 7/00

(54) **WEARABLE ELECTRONIC DEVICE FOR DISPLAYING VIRTUAL OBJECT, AND OPERATING METHOD THEREOF**

(30) Priority: 21.11.2023 KR 20230161879; 08.01.2024 KR 20240003001
(71) Applicant: Samsung Electronics Co., Ltd., Suwon-si, Gyeonggi-do 16677 (KR)
(72) Inventor: SIM, Hyungbo, Suwon-si Gyeonggi-do 16677 (KR); YOO, Nagyeom, Suwon-si Gyeonggi-do 16677 (KR); LEE, Chaeyeon, Suwon-si Gyeonggi-do 16677 (KR); CHUNG, Miyeoung, Suwon-si Gyeonggi-do 16677 (KR); HAM, Yookyung, Suwon-si Gyeonggi-do 16677 (KR)
(74) Representative: Gulde & Partner
(86) International application number: PCT/KR2024/018174
(87) International publication number: WO 2025/110655

(57) **Abstract**

Proposed is an operation method of a wearable electronic device, the device: establishing a communication connection with a first external electronic device; acquiring first information about a chargeable location for a first external electronic device capable of performing a wireless power sharing function; identifying a second external electronic device to be wirelessly charged via the first external electronic device; acquiring a video image of a surrounding physical environment via a camera included in the wearable electronic device; identifying, from the video image, the chargeable location for the first external electronic device on the basis of the first information; and displaying, together with the video image via a display included in the wearable electronic device, a virtual first guide object corresponding to the chargeable location for the first external electronic device.

## Description

### [TECHNICAL FIELD]

Embodiments of the disclosure relate to a wearable electronic device that displays a virtual object and a method of operating the same.

### [BACKGROUND ART]

Various services and additional functions provided through wearable electronic devices such as augmented reality glasses (AR glasses), video see-through (VST) devices, and head-mounted display (HMD) devices are gradually increasing. In order to increase the utility value of these electronic devices and meet the various needs of users, communication service providers or electronic device manufacturers are competitively developing electronic devices to provide various functions and differentiate themselves from other companies. Accordingly, various functions provided through wearable electronic devices are gradually advancing.

AR glasses or VST devices display virtual images while being worn on the user's body to provide a realistic experience to the user. AR glasses or video see-through (VST) devices may replace the usability of smart phones in various fields such as gaming entertainment, education, and social networking services (SNS). Users may receive content similar to reality through AR glasses or video see-through (VST) devices, and may feel as if they were staying in a virtual world through interaction.

### [DETAILED DESCRIPTION OF THE INVENTION]

### [TECHNICAL PROBLEM]

According to an embodiment, a wearable electronic device configured to be worn on a head of a user may include a camera, a communication circuit, a display, memory, including one or more storage media, storing instructions, and at least one processor including processing circuitry. According to an embodiment, the instructions, when executed by the at least one processor individually or collectively, may cause the wearable electronic device to establish, using the communication circuit, a communication connection with a first external electronic device. According to an embodiment, the instructions, when executed by the at least one processor individually or collectively, may cause the wearable electronic device to obtain first information about a chargeable location of the first external electronic device capable performing a wireless power sharing function. According to an embodiment, the instructions, when executed by the at least one processor individually or collectively, may cause the wearable electronic device to identify a second external electronic device to be wirelessly charged through the first external electronic device. According to an embodiment, the instructions, when executed by the at least one processor individually or collectively, may cause the wearable electronic device to obtain, through the camera, a video image of a physical surrounding environment. According to an embodiment, the instructions, when executed by the at least one processor individually or collectively, may cause the wearable electronic device to identify the chargeable location of the first external electronic device, based on the first information, from the video image. According to an embodiment, the instructions, when executed by the at least one processor individually or collectively, may cause the wearable electronic device to display, through the display, a first virtual guide object corresponding to the chargeable location of the first external electronic device with the video image.

According to an embodiment, a method of operating a wearable electronic device configured to be worn on a head of a user may include establishing a communication connection with a first external electronic device. According to an embodiment, the method of operating a wearable electronic device may include obtaining first information about a chargeable location of the first external electronic device capable performing a wireless power sharing function. According to an embodiment, the method of operating a wearable electronic device may include identifying a second external electronic device to be wirelessly charged through the first external electronic device. According to an embodiment, the method of operating a wearable electronic device may include obtaining a video image of a physical surrounding environment through a camera 410 included in the wearable electronic device. According to an embodiment, the method of operating a wearable electronic device may include identifying, based on the first information, the chargeable location of the first external electronic device from the video image. According to an embodiment, the method of operating a wearable electronic device may include displaying, through a display included in the wearable electronic device, a first virtual guide object corresponding to the chargeable location of the first external electronic device with the video image.

According to an embodiment, a wearable electronic device configured to be worn on a head of a user may include a camera, a communication circuit, a display memory, including one or more storage media, storing instructions, and at least one processor including processing circuitry. According to an embodiment, the instructions, when executed by the at least one processor individually or collectively, may cause the wearable electronic device to establish a communication connection with a first external electronic device using the communication circuit. According to an embodiment, the instructions, when executed by the at least one processor individually or collectively, may cause the wearable electronic device to identify whether or not the first external electronic device is wirelessly charging a second external electronic device when identifying that an event for outputting a notification has occurred in the first external electronic device through the communication connection. According to an embodiment the instructions, when executed by the at least one processor individually or collectively, may cause the wearable electronic device to display, through the display, a virtual screen indicating the event when identifying that the first external electronic device is wirelessly charging the second external electronic device. According to an embodiment, the instructions, when executed by the at least one processor individually or collectively, may cause the wearable electronic device to identify a user's gesture input to the screen using the camera. According to an embodiment, the instructions, when executed by the at least one processor individually or collectively, may cause the wearable electronic device to transmit, based on the gesture input, a control signal for the event to the first external electronic device through the communication connection.

According to an embodiment, a non-transitory computer-readable recording medium may store instructions that enable a wearable electronic device to establish a communication connection with a first external electronic device, the wearable electronic device to obtain first information about a chargeable location of the first external electronic device capable performing a wireless power sharing function, the wearable electronic device to identify a second external electronic device to be wirelessly charged through the first external electronic device, obtaining a video image of a physical surrounding environment through a camera included in the wearable electronic device, the wearable electronic device to identify, based on the first information, the chargeable location of the first external electronic device from the video image, and the wearable electronic device to display, through a display included in the wearable electronic device, a first virtual guide object corresponding to the chargeable location of the first external electronic device with the video image.

### [BRIEF DESCRIPTION OF DRAWINGS]

FIG. 1 is a block diagram of an electronic device in a network environment according to various embodiments.
FIG. 2 is a perspective view illustrating the internal configuration of a wearable electronic device according to an embodiment of the disclosure.
FIGS. 3A and 3B are diagrams illustrating the front and rear sides of a wearable electronic device according to an embodiment.
FIG. 4 is a diagram illustrating a system including a wearable electronic device and a first electronic device according to an embodiment.
FIG. 5 is a schematic block diagram illustrating a system including a wearable electronic device, a first electronic device, and external electronic devices according to an embodiment.
FIG. 6 is a flowchart illustrating a method in which a wearable electronic device displays a virtual guide object according to an embodiment.
FIG. 7 is a diagram illustrating a method in which a wearable electronic device displays a first virtual guide object according to an embodiment.
FIG. 8 is a diagram illustrating a method in which a wearable electronic device displays a plurality of virtual guide objects according to an embodiment.
FIG. 9 is a flowchart illustrating a method in which a wearable electronic device displays information including a notification if it is identified that the battery level of a second external electronic device is lower than a specified first level according to an embodiment.
FIGS. 10A, 10B, and 10C are diagrams illustrating a method in which a wearable electronic device displays information including a notification if it is identified that the battery level of a second external electronic device is lower than a specified first level according to an embodiment.
FIG. 11 is a flowchart illustrating a method in which a wearable electronic device displays a guide indicating location movement of a first external electronic device, based on whether the first external electronic device is located on a chargeable area of a first electronic device, according to an embodiment.
FIG. 12 is a diagram illustrating a method in which a wearable electronic device displays a guide indicating location movement of a first external electronic device, based on whether the first external electronic device is located on a chargeable area of a first electronic device, according to an embodiment.
FIG. 13 is a flowchart illustrating a method in which a wearable electronic device displays battery information about each of a first electronic device and a first external electronic device while the first electronic device is charging the first external electronic device according to an embodiment.
FIGS. 14A, 14B, and 14C are diagrams illustrating a method in which a wearable electronic device displays battery information about each of a first electronic device and a first external electronic device while the first electronic device is charging the first external electronic device according to an embodiment.
FIG. 15 is a flowchart illustrating a method in which a wearable electronic device processes an event occurring in a first electronic device while the first electronic device is charging a first external electronic device according to an embodiment.
FIGS. 16A, 16B, 16C, and 16D are diagrams illustrating a method in which a wearable electronic device processes an event occurring in a first electronic device while the first electronic device is charging a first external electronic device according to an embodiment.

### [MODE FOR CARRYING OUT THE INVENTION]

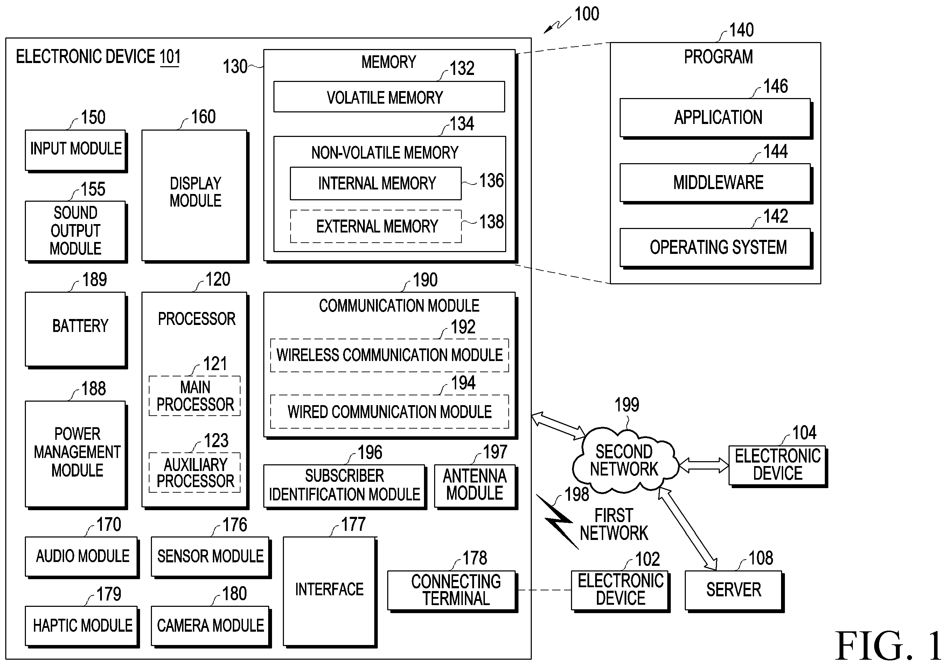

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

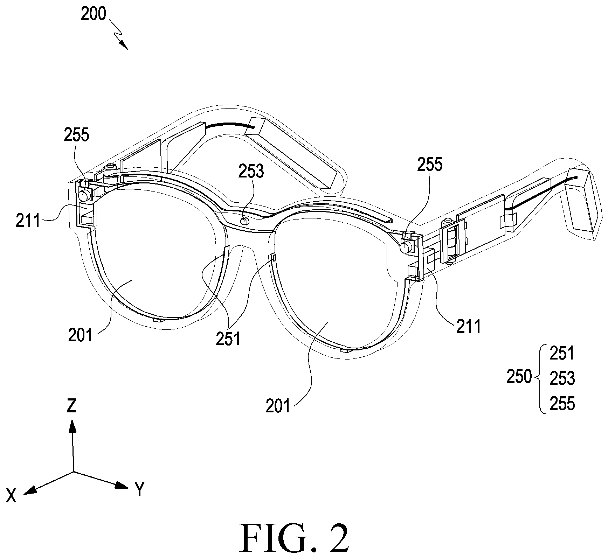

FIG. 2 is a perspective view illustrating the internal configuration of a wearable electronic device according to an embodiment of the disclosure.

Referring to FIG. 2, a wearable electronic device 200 according to an embodiment of the disclosure may include at least one of a light output module 211, a display member 201, and a camera module 250.

According to an embodiment of the disclosure, the light output module 211 may include a light source capable of outputting an image, and a lens that guides the image to the display member 201. According to an embodiment of the disclosure, the light output module 211 may include at least one of a liquid crystal display (LCD), a digital mirror device (DMD), or a liquid crystal-on-silicon (LCoS) device, an organic light-emitting diode (OLED), or a micro light-emitting diode (micro LED).

According to an embodiment of the disclosure, the display member 201 may include an optical waveguide (e.g., wave guide). According to an embodiment of the disclosure, the image output from the light output module 211 and incident on one end of the optical waveguide may be propagated inside the optical waveguide and provided to the user. According to an embodiment of the disclosure, the optical waveguide may include at least one of at least one diffractive element (e.g., diffractive optical element (DOE) or holographic optical element (HOE)) or reflective element (e.g., reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed inside the lens frame and around the display member 201.

According to an embodiment of the disclosure, a first camera module 251 may photograph and/or recognize the eyes of the user or gaze trajectory. For example, the first camera module 251 capture an image of a user's pupil or iris to be used as trajectory information. According to an embodiment of the disclosure, the first camera module 251 may periodically or aperiodically transmit information (e.g., the trajectory information) related to the trajectory of the eyes of the user or gaze to a processor (e.g., the processor 120 in FIG. 1).

According to an embodiment of the disclosure, a second camera module 253 may capture external images.

According to an embodiment of the disclosure, a third camera module 255 may be used for hand detection and tracking, and user gesture (e.g., hand gesture) recognition. The third camera module 255 according to an embodiment of the disclosure may be used for three degrees of freedom (3DoF), 6DoF head tracking, location (space or environment) recognition, and/or movement recognition. The second camera module 253 may be used for hand detection and tracking, and user gesture recognition according to an embodiment of the disclosure. According to an embodiment of the disclosure, at least one of the first camera module 251 to the third camera module 255 may be replaced with a sensor module (e.g., LiDAR sensor). For example, the sensor module may include at least one of a vertical cavity surface emitting laser (VCSEL), an infrared sensor, and/or a photodiode.

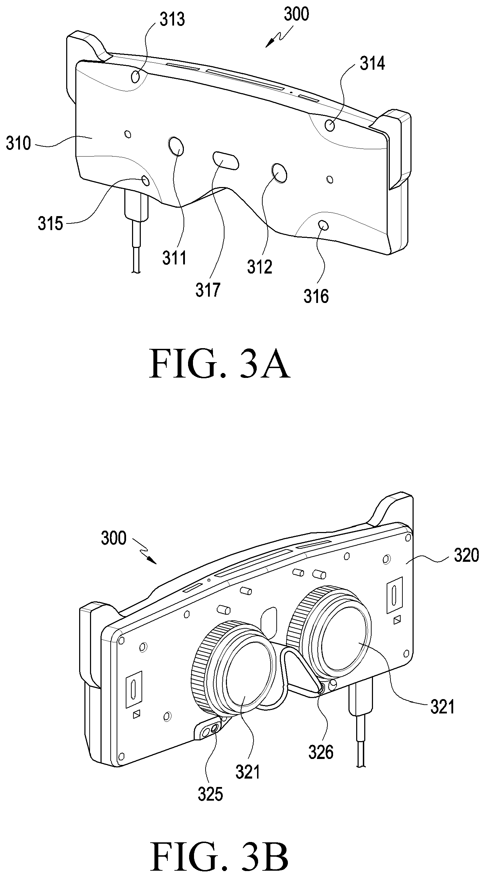

FIGS. 3A and 3B are diagrams illustrating the front and rear sides of a wearable electronic device according to an embodiment.

Referring to FIGS. 3A and 3B, in an embodiment, camera modules 311, 312, 313, 314, 315, and 316 and/or a depth sensor 317 may be disposed on a first surface 310 of a housing of the wearable electronic device 300 to obtain information related to the surrounding environment of the wearable electronic device 300.

In an embodiment, the camera modules 311 and 312 may obtain images related to the surrounding environment of the wearable electronic device.

In an embodiment, the camera modules 313, 314, 315, and 316 may obtain images while the wearable electronic device is being worn on the user. The camera modules 313, 314, 315, and 316 may be used for hand detection and tracking, and user gesture (e.g., hand gesture) recognition. The camera modules 313, 314, 315, and 316 may be used for 3DoF and 6DoF head tracking, location (space or environment) recognition, and/or movement recognition. In an embodiment, the camera modules 311 and 312 may also be used for hand detection and tracking, and user gestures.

In an embodiment, the depth sensor 317 may be configured to transmit a signal and receive a signal reflected from an object, and may be used to determine the distance to an object, such as time of flight (TOF). Instead of or additionally to the depth sensor 217, camera modules 213, 214, 215, and 216 may identify the distance to the object.

According to an embodiment, camera modules 325 and 326 for face recognition and/or a display 321 (and/or lenses) may be disposed on a second surface 320 of the housing of the wearable electronic device 300.

In an embodiment, the face-recognition camera modules 325 and 326 adjacent to the display may be used to recognize the face of the user, or may recognize and/or track both eyes of the user.

In an embodiment, the display 321 (and/or lenses) may be disposed on the second surface 320 of the wearable electronic device 300. In an embodiment, the wearable electronic device 300 may exclude the camera modules 315 and 316 from the plurality of camera modules 313, 314, 315, and 316. Although not shown in FIGS. 3A and 3B, the wearable electronic device 300 may further include at least one of the configurations shown in FIG. 2.

As described above, the wearable electronic device 300 according to an embodiment may have a form factor to be worn on the head of the user. The wearable electronic device 300 may further include a strap and/or a wearing member to be fixed to a part of a body of the user. The wearable electronic device 300 may provide a user experience based on augmented reality, virtual reality, and/or mixed reality while being worn on head of the user.

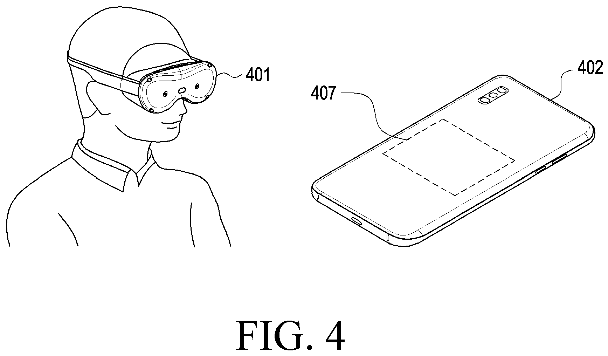

FIG. 4 is a diagram illustrating a system including a wearable electronic device and a first electronic device according to an embodiment.

Referring to FIG. 4, according to an embodiment, a first electronic device 402 may perform a function or an operation of wirelessly transmitting (or sharing) power (hereinafter, a first function). For example, the first electronic device 402 may be implemented to be the same as or similar to the electronic device 101 in FIG. 1. For example, the first electronic device 402 may be implemented as a smartphone or tablet PC.

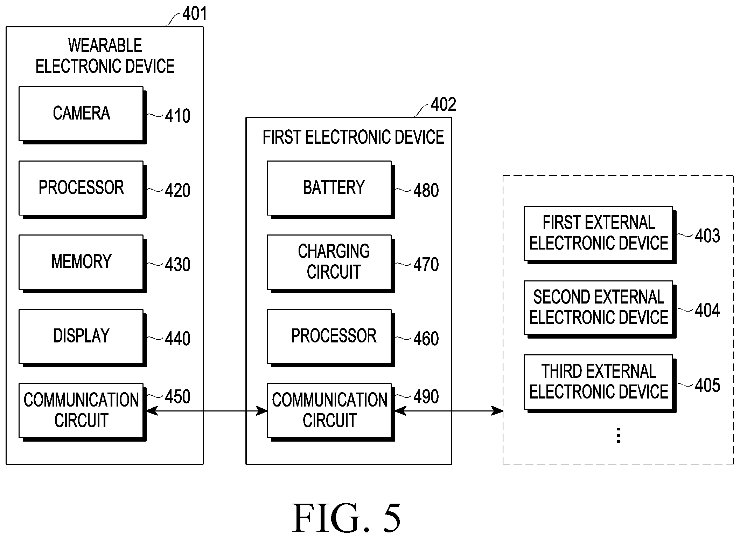

According to an embodiment, the first electronic device 402 may include a charging circuit (e.g., the charging circuit 470 in FIG. 5) including coils. The first electronic device 402 may provide power stored in a battery (e.g., the battery 480 in FIG. 5) to an external electronic device using the charging circuit 470. To this end, when an external electronic device is located on a chargeable area 407 of the first electronic device 402, the first electronic device 402 may wirelessly provide power to the external electronic device.

Since the charging circuit 470 including coils is disposed inside a housing of the first electronic device 402, the chargeable area 407 of the first electronic device 402 is invisible to the user's eyes. In addition, the chargeable area 407 may vary depending on the type of electronic device. For example, the chargeable area 407 may include an area where the first electronic device 402 is able to normally transmit wireless power to an external electronic device. However, in order to wirelessly transmit power, the coil included in the first electronic device 402 that transmits power and the coil included in the external electronic device that receives power may need to be arranged in parallel. For example, when the external electronic device is located outside the chargeable area 407 of the first electronic device 402, the first electronic device 402 is unable to provide power wirelessly to the external electronic device. Alternatively, if the external electronic device is located outside the chargeable area 407 of the first electronic device 402, the first electronic device 402 may wirelessly provide power to the external electronic device with low power transmission efficiency.

According to an embodiment, the wearable electronic device 401 may display a virtual guide object in the area corresponding to the chargeable ar ea 407. For example, the wearable electronic device 401 may display a virtual guide object in an area corresponding to the charging area 407 so that the user may identify the chargeable area 407 of the first electronic device 402. For example, the virtual guide object may include augmented reality content. F or example, the augmented reality content may include an image or an indicator.

According to an embodiment, based on the virtual guide object, the user wearing the wearable electronic device 401 may easily identify the chargeable area 407 of the first electronic device 402. In addition, the user wearing the wearable electronic device 401 may easily charge the external electronic device wirelessly using the first electronic device 402. In addition, the first electronic device 402 may charge the external electronic device with high power transmission efficiency if the external electronic device is correctly positioned on the chargeable area 407. Although FIG. 4 illustrates one or more embodiments related to a wireless charging function, the disclosure is not limited thereto, and as such, according to another embodiment, the wearable electronic device 401 may be configured to display guide information related to an area corresponding to another function or operation related to the first electronic device.

FIG. 5 is a schematic block diagram illustrating a system including a wearable electronic device, a first electronic device, and external electronic devices according to an embodiment.

Referring to FIG. 5, according to an embodiment, the wearable electronic device 401 may include a camera 410, a processor 420, memory 430, a display 430, and a communication circuit 450. According to an embodiment, the wearable electronic device 401 may be implemented as an electronic device capable of being worn on the user's head or face (e.g., head-mounted electronic device). For example, the wearable electronic device 401 may be implemented as augmented reality (AR) glasses, a virtual reality (VR) device, a mixed reality (MR) device, an extended reality (XR) device, a video see-through (VST) device, or a head-mounted display (HMD) device. According to an embodiment, the wearable electronic device 401 may be implemented to be the same as or similar to the wearable electronic device 200 in FIG. 2 or the wearable electronic device 300 in FIGS. 3A and 3B.

According to an embodiment, the processor 420 may control the overall operation of the wearable electronic device 401. For example, the processor 420 may be implemented to be the same as or similar to the processor 120 in FIG. 1. According to an embodiment, the memory 430 (e.g., the memory 130 in FIG. 1) may store information about the wearable electronic device 401. For example, the memory 430 may store instructions related to the operation of the wearable electronic device 401.

According to an embodiment, the processor 420, using a communication circuit 450 (e.g., the communication module 190 in FIG. 1), may establish a communication connection with the first electronic device 402 that performs a function or an operation of wirelessly sharing power. For example, the communication connection may utilize short-range wireless communication technology (e.g., Bluetooth, BLE, Wi-Fi, or Wi-Fi Direct). For example, the communication circuit 450 may support short-range wireless communication technology (e.g., Bluetooth, BLE, Wi-Fi, or Wi-Fi Direct).

According to an embodiment, the processor 420 may obtain first information about a chargeable area (or chargeable location) (e.g., the chargeable area 407 in FIG. 4) of the first electronic device 402. According to some examples, the chargeable area may be referred to as a chargeable location or a charging location. For example, the first information may include information about the type of the first electronic device 402, the physical size of the first electronic device 402, whether or not the first electronic device 402 supports a wireless power sharing function, and/or the location of the chargeable area of the electronic device 402. For example, the processor 420 may obtain first information about the chargeable location of the first electronic device 402 (or the location of the coil of the first electronic device 402) from the first electronic device 402 or an external server. Alternatively, the processor 420 may obtain the first information from the memory 230 in the case where the first information is previously stored in the memory 230. For example, the processor 420 may obtain first information including a table in which the chargeable area 407 is mapped to the type of the first electronic device 402 from the first electronic device 402, an external server, or the memory 230. The processor 420 may identify the location of the chargeable area 407 on the rear side of the first electronic device 402, based on the first information. For example, the processor 420, based on the first information, may obtain a video image representing the physical environment surrounding the wearable electronic device 401, which is obtained through the camera 410. The processor 420 may identify a chargeable area of the first electronic device 402, based on the first information, from the video image. For example, the chargeable area 407 may include an area where the first electronic device 402 may wirelessly transmit power to a first external electronic device with a power transmission efficiency higher than a specified efficiency.

According to an embodiment, the processor 420, using a communication connection with the first electronic device 402, may identify at least one external electronic device 403, 404, or 405 connected to the first electronic device 402 using wireless communication technology (e.g., Bluetooth, BLE, Wi-Fi, or Wi-Fi Direct). The processor 420 may receive, from the first electronic device 402, a list of at least one electronic device 403, 404, and/or 405 wirelessly connected to the first electronic device 402. The processor 420 may receive, from the first electronic device 402, information about the battery level (hereinafter, battery information) of at least one electronic device 403, 404, and/or 405 wirelessly connected to the first electronic device 402. For example, at least one external electronic device 403, 404, and/or 405 may include a wearable electronic device and/or an Internet-of-Things device.

According to an embodiment, the processor 420, using the communication connection with the first electronic device 402, may identify whether or not the first electronic device 402 has activated a first function of wirelessly transmitting power (e.g., the first function is turned on). According to an embodiment, based on identifying that the first electronic device 402 has activated the first function, the processor 420 may identify at least one external electronic device 403, 404, and/or 405 (or a list of at least one external electronic device 403, 404, and/or 405) connected to the first electronic device 402. According to an embodiment, even if the first electronic device 402 deactivates the first function of wirelessly transmitting power (e.g., the first function is turned off), the processor 420 may identify at least one external electronic device 403, 404, and/or 405 (or a list of at least one external electronic device 403, 404, and/or 405) connected to the first electronic device 402.

According to an embodiment, the processor 420 may identify the first electronic device 402 using the camera 410. For example, the processor 420 may identify the rear side of the first electronic device 402 (e.g., the rear side of the first electronic device 402 where the display is not disposed).

According to an embodiment, the processor 420, based on the first information about the first electronic device 402, may identify a chargeable area 407 from the first electronic device 402 identified through the camera 410. The processor 420 may compare the first information with the physical size of the first electronic device 402 identified through the camera 410, and identify the chargeable area 407 (or the size of the chargeable area 407) on the rear side of the first electronic device 402.

According to an embodiment, the processor 420 may display, through the display 440, a virtual guide object corresponding to at least one external electronic device 403, 404, and/or 405 on a first area of the first electronic device 402 corresponding to the chargeable area 407 of the first electronic device 402. For example, the first area may be on a rear side of the first electronic device 402, but the disclosure is not limited thereto. For example, the guide object may include an object to inform of the chargeable area 407. For example, the guide object may include a representative image representing at least one external electronic device 403, 404, and/or 405, which is implemented as augmented reality content. The processor 420, based on the first information, may produce a virtual guide object corresponding to at least one external electronic device to be charged through the first electronic device 402. For example, the processor 420, based on the type of at least one external electronic device to be charged through the first electronic device 402, may produce a virtual guide object representing the form or shape corresponding to the type thereof. For example, the processor 420 may display a video image representing the physical environment surrounding the wearable electronic device 401 obtained through the camera 410, and a virtual guide object. For example, the wearable electronic device 401 may display the virtual guide object to be superimposed on the video image. For example, if a first external electronic device 403 is a smartwatch, the processor 420 may produce (or obtain) a virtual guide object representing the smartwatch and display the produced guide object on the first area. For example, if a second external electronic device 404 is a smart ring, the processor 420 may produce (or obtain) a virtual guide object representing the smart ring and display the produced guide object on the first area. For example, if a third external electronic device 405 is a case for wireless earphones, the processor 420 may produce (or obtain) a virtual guide object representing the case for wireless earphones and display the produced guide object on the first area. For example, if a fourth external electronic device (not shown) is a smartphone, the processor 420 may produce (or obtain) a virtual guide object representing the smartphone and display the produced guide object on the first area. For example, the first area may indicate an area where the guide object is displayed (e.g., the chargeable area of the first electronic device 402). For example, the first area may indicate an area where the virtual guide object is displayed on a video image representing the surrounding environment of the wearable electronic device 401 obtained through the camera 410. For example, the first area may be an area corresponding to the chargeable area (or chargeable location) of the first electronic device 402 in the video image.

According to an embodiment, the processor 420 may identify, through at least one of the camera 410 and/or the communication circuit 450, at least one external electronic device 403, 404, and/or 405 to be charged through the first electronic device 402. For example, the processor 420 may identify at least one external electronic device 403, 404, and/or 405 that is or is not connected to the first electronic device 402.

In an example case in which a plurality of external electronic devices 403, 404, and 405 to be charged through the first electronic device 402 are identified, the processor 420 may display virtual guide objects corresponding to the plurality of external electronic devices 403, 404, and 405 on the chargeable area 407 of the first electronic device 402. For example, if a plurality of external electronic devices 403, 404, and 405 to be charged through the first electronic device 402 are identified, the processor 420 may sequentially display, through the display 440, virtual guide objects corresponding to the plurality of external electronic devices 403, 404, and 405 on the first area of the rear side of the first electronic device 402 corresponding to the chargeable area 407 of the first electronic device 402. For example, the processor 420 may sequentially display the virtual guide objects, based on a predetermined order (e.g., the order based on user settings or battery levels).

According to an embodiment, if a plurality of external electronic devices 403, 404, and 405 are connected to the first electronic device 402, the processor 420 may sequentially display, through the display 440, virtual guide objects corresponding to the plurality of external electronic devices 403, 404, and 405 on the first area of the rear side of the first electronic device 402 corresponding to the chargeable area 407 of the first electronic device 402. For example, the processor 420 may sequentially display the virtual guide objects, based on a predetermined order (e.g., the order based on user settings or battery levels).

According to an embodiment, the processor 420, using the camera 410, may identify that any one external electronic device (e.g., the first external electronic device 403) among at least one external electronic device 403, 404, and/or 405 is located on the first electronic device 402. The processor 420 may identify whether or not the first external electronic device 403 is located in the chargeable area 407 of the first electronic device 402.

According to an embodiment, if it is identified that the first external electronic device 403 is located in an area other than the chargeable area 407 of the first electronic device 402, the processor 420 may display, through the display 440, a guide that guides location movement to the chargeable area 407 of the first electronic device 402. For example, the guide that guides location movement may be implemented as augmented reality content (e.g., arrows). For example, the guide that guides location movement may be displayed on the first electronic device 402 identified through the camera 410.

According to an embodiment, if it is identified that the first electronic device 402 wirelessly transmits power to the first external electronic device 403, the processor 420 may obtain battery information of each of the first electronic device 402 and the first external electronic device 403 through the communication connection with the first electronic device 402. For example, the battery information may include information indicating the battery level of each of the first electronic device 402 and the first external electronic device 403 and/or time required to reach the target battery level thereof.

According to an embodiment, the processor 420, based on the battery information, may display, through the display 440, information about the battery level of the first electronic device 402 as a first virtual object. For example, the first virtual object may be displayed near or on the first electronic device 402. Based on the battery information, the processor 420 may display, through the display 440, information about the battery level of the first external electronic device 403 as a second virtual object. For example, the second virtual object may be displayed near or on the first external electronic device 403. For example, the first object and the second object may be implemented as augmented reality images.

According to an embodiment, the processor 420 identify whether or not an event to output a notification has occurred in the first electronic device 402 (e.g., a call reception event, an alarm event, a message reception event, or external electronic device detection event) through the communication connection with the first electronic device 402. If it is identified the event to output the notification has occurred in the first electronic device 402, the processor 420 may identify whether or not the first electronic device 402 is wirelessly charging an external electronic device (e.g., the first external electronic device 403).

According to an embodiment, if it is identified that the first electronic device 402 is wirelessly charging the first external electronic device 403, the processor 420 display a virtual screen indicating the event on the display. For example, if it is identified that the first electronic device 402 is wirelessly charging the first external electronic device 403, the processor 420 may perform, as a virtual screen, mirroring of a screen for an event (e.g., a screen including a notification) occurring in the first electronic device 402 through the display. For example, the virtual screen may be displayed near or on the first electronic device 402. For example, the virtual screen may be implemented as augmented reality content (e.g., images, videos, and/or messages).

According to an embodiment, the processor 420, based on a user input to the virtual screen, may control, perform, or process a function (e.g., a call reception function, an alarm checking function, a message reception function, or an external electronic device detection function) corresponding to the event.

According to an embodiment, the processor 420 may identify a user's gesture input to the virtual screen using the camera 410. The processor 420, based on the gesture input, may transmit a control signal for the event occurring in the first electronic device 402 to the first electronic device 402 through the communication connection. Through this, the processor 420 may control or process functions for events of the first electronic device 402 in the wearable electronic device 401.

According to an embodiment, if it is identified that the first electronic device 402 is wirelessly charging the first external electronic device 403, the processor 420 may output vibration corresponding to the event of the first electronic device 402 using a vibrator included in the wearable electronic device 401. In addition, if it is identified that the first electronic device 402 is wirelessly charging the first external electronic device 403, the processor 420 may also output sound corresponding to the event of the first electronic device 402 using a speaker included in the wearable electronic device 401.

According to an embodiment, the processor 420 may transmit, to the first electronic device, a command to prevent the first electronic device 402 from outputting a notification about the event through the communication connection. Through this, the first electronic device 402 may stably charge the first external electronic device 403 without outputting a notification.

According to an embodiment, the first electronic device 402 may include a processor 460, a charging circuit 470, a battery 480, and a communication circuit 490. According to an embodiment, the first electronic device 402 may be implemented as a smartphone or tablet PC.

According to an embodiment, the processor 460 may control the overall operation of the first electronic device 402. For example, the processor 460 may be implemented to be the same as or similar to the processor 120 in FIG. 1.

According to an embodiment, the processor 460 may establish a communication connection with the wearable electronic device 401 using the communication circuit 490. In addition, the processor 460 may establish a communication connection with at least one electronic device 403, 404, and/or 405 using the communication circuit 490.

According to an embodiment, the processor 460 may wirelessly transmit power to an external electronic device 403, 404, or 405 located on the chargeable area 407 of the first electronic device 402.

According to an embodiment, the processor 460 may identify the occurrence of an event that outputs a notification while wirelessly transmitting power to the external electronic device 403, 404, or 405. The processor 460 may transmit information about the event (e.g., information about a screen including the notification) to the wearable electronic device 401 while wirelessly transmitting power to the external electronic device 403, 404, or 405. Depending on the implementation, the processor 460 may not output the notification for the event.

According to an embodiment, the processor 460 may receive control information about the event received from the wearable electronic device 401 through the communication connection. The processor 460 may perform a function for the event, based on control information. In addition, the processor 460 may transmit information about a result of performing the function for the event to the wearable electronic device 401.

At least some of the operations of the wearable electronic device 401 described below may be performed by the processor 420. However, the entity for the operations will be explained as the wearable electronic device 401.

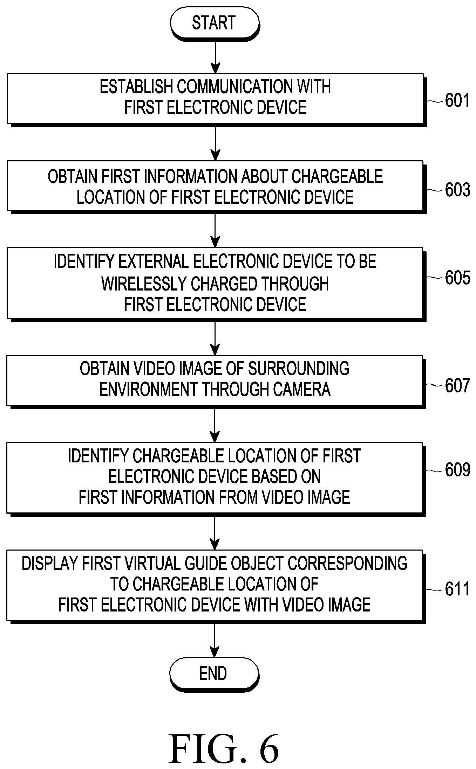

FIG. 6 is a flowchart illustrating a method in which a wearable electronic device displays a virtual guide object according to an embodiment.

Referring to FIG. 6, according to an embodiment, in operation 601, a wearable electronic device (e.g., the wearable electronic device 401 in FIG. 5) may establish a communication connection with a first electronic device capable of performing a function of wirelessly sharing power (or wireless power sharing function).

According to an embodiment, in operation 603, the wearable electronic device 401 may obtain first information about a chargeable location (or chargeable area) of the first electronic device (e.g., the first electronic device 402 in FIG. 5).

According to an embodiment, in operation 605, the wearable electronic device 401 may identify at least one external electronic device to be wirelessly charged through the first electronic device 402. For example, the wearable electronic device 401 may identify at least one external electronic device connected to the first electronic device 402. Alternatively, the wearable electronic device 401 may also identify at least one nearby external electronic device through the camera 410.

According to an embodiment, in operation 607, the wearable electronic device 401 may obtain a video image corresponding to the surrounding environment of the wearable electronic device 401 through the camera 410. For example, the video image may include a video image showing the physical environment surrounding the wearable electronic device 401. For example, the video image may contain the first electronic device 402. According to another embodiment, in the case where the wearable electronic device 401 is implemented as AR glasses, operation 607 may be omitted.

According to an embodiment, in operation 609, the wearable electronic device 401 may identify the chargeable location of the first electronic device 402, based on the first information about the first electronic device 402, from the video image. For example, the wearable electronic device 401 may compare the physical size of the first electronic device 402 with the chargeable location (e.g., the chargeable area 407 in FIG. 4) of the first information to identify the chargeable location on the rear side of the first electronic device 402. For example, the wearable electronic device 401 may compare the physical size of the first electronic device 402 in the video image with the chargeable location of the first information to identify the chargeable location on the rear side of the first electronic device 402.

According to an embodiment, in operation 611, the wearable electronic device 401 may display, through a display (e.g., the display 440 in FIG. 5), a first virtual guide object corresponding to the chargeable location of the first electronic device 402 with the video image. For example, the wearable electronic device 401 may display a first virtual guide object corresponding to the form or shape of an external electronic device (e.g., the first external electronic device 403 in FIG. 5) in the chargeable location of the rear side of the first electronic device 402. For example, the wearable electronic device 401 may identify the type of the external electronic device 403 and may display, as a first virtual guide object (e.g., an augmented reality object), a representative image corresponding to the type of the external electronic device 403. For example, the wearable electronic device 401 may display a first virtual guide object produced based on the type of the external electronic device 403 on the video image (e.g., the chargeable location of the first electronic device in the video image) to overlap the same.

According to an embodiment, the wearable electronic device 401, based on identifying that the first electronic device 402 has activated the first function for sharing power with an external electronic device through the communication connection, may perform operations 603 to 609 described above. However, this is only an example, and even if it is identified that the first electronic device 402 has deactivated the first function, the above-described operations 603 to 609 may be performed. At this time, the wearable electronic device 401 may display, through the display 440, information (e.g., information implemented as an augmented reality image) that induces the user to activate the first function of the first electronic device 402.

According to an embodiment, the wearable electronic device 401, based on identification of the rear side of the first electronic device 402 using the camera 410, may perform the above-described operations 607 to 609. However, this is only an example, and the above-described operations 607 to 609 may be performed even if the rear side of the first electronic device 402 is not identified. At this time, the wearable electronic device 401 may display, through display440, information (e.g., information implemented as an augmented reality image) that guides the user to place the first electronic device 402 such that the rear side of the first electronic device 402 is visible.

According to an embodiment, the wearable electronic device 401 may identify the gaze direction of the user using a gaze tracking camera or gaze tracking sensor included in the wearable electronic device 401. If it is identified that the gaze of the user is directed to the first electronic device 402, the wearable electronic device 401 may display a first virtual guide object 710. If it is identified that the gaze of the user is not directed to the first electronic device 402, the wearable electronic device 401 may not display the first virtual guide object 710.

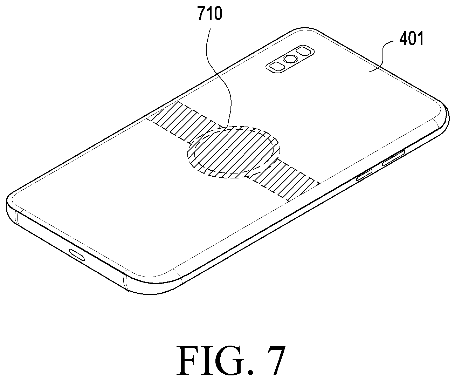

FIG. 7 is a diagram illustrating a method in which a wearable electronic device displays a first virtual guide object according to an embodiment.

Referring to FIG. 7, according to an embodiment, the wearable electronic device 401 may control a display to display virtual object corresponding to the first external electronic device 403 on a first area corresponding to the chargeable area of the first electronic device 402. For example, the wearable electronic device 401 may display, through a display (e.g., the display 440 in FIG. 5), a virtual guide object 710 corresponding to the first external electronic device 403 on a first area of the rear side of the first electronic device 402 corresponding to the chargeable area of the first electronic device 402. For example, the first area may be an area corresponding to at least a portion of the chargeable area of the first electronic device 402. For example, the guide object may include a virtual object to inform the user of the chargeable area of the first electronic device 402. For example, the guide object may include an image representing the first external electronic device 403 implemented as augmented reality content. For example, if the first external electronic device 403 is a smartwatch, the guide object 710 may include a virtual object (e.g., a wristwatch-shaped image) representing the smartwatch.

According to an embodiment, the wearable electronic device 401 may identify the gaze of the user direction using a gaze tracking camera or gaze tracking sensor included in the wearable electronic device 401. If it is identified that the gaze of the user is directed to the first electronic device 402, the wearable electronic device 401 may display a plurality of virtual guide objects 710, 720, and 730. If it is identified that the gaze of the user is not directed to the first electronic device 402, the wearable electronic device 401 may not display the plurality of virtual guide objects 710, 720, and 730.

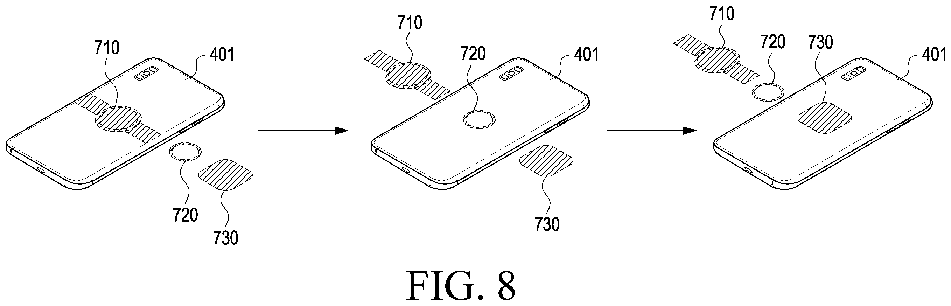

FIG. 8 is a diagram illustrating a method in which a wearable electronic device displays a plurality of virtual guide objects according to an embodiment.

Referring to FIG. 8, according to an embodiment, if a plurality of external electronic devices 403, 404, and 405 are connected to the first electronic device 402, the wearable electronic device 401 may display, through the display 440, virtual objects 710, 720, and 730 representing the plurality of external electronic devices 403, 404, and 405. For example, the wearable electronic device 401 may sequentially display virtual guide objects 710, 710, and 730 corresponding to the plurality of external electronic devices 403, 404, and 405 on the first area of the rear side of the first electronic device 402 corresponding to the chargeable area of the first electronic device 402. For example, if the first guide object 710 is displayed on the first area, the second guide object 720 and the third guide object 730 may be displayed next to (or behind) the first guide object 710 in sequence. For example, if the first external electronic device 403 is a smartwatch, the first guide object 710 may include a virtual object (e.g., a wristwatch-shaped image) representing the smartwatch. For example, if the second external electronic device 404 is a smart ring, the second guide object 720 may include a virtual object (e.g., a ring-shaped image) representing the smart ring. For example, if the third external electronic device 403 is wireless earphones, the third guide object 730 may include a virtual object (e.g., an image of the wireless earphone case) representing the wireless earphones or a case of the wireless earphones. However, the disclosure is not limited thereto, and as such, according to another embodiment, the wearable electronic device 401 may display one or more of the virtual guide objects 710, 710, and 730 based on a condition being met.

According to an embodiment, the wearable electronic device 401 may sequentially display virtual guide objects on the first area of the rear side of the first electronic device 402, based on a predetermined order (e.g., an order based on user settings or battery levels).

According to an embodiment, the wearable electronic device 401 may preferentially display a virtual guide object corresponding to an external electronic device having the lowest battery level on the first area, and later display a virtual guide object corresponds to an external electronic device having the highest battery level on the first area. For example, if the battery level of the smartwatch is 30%, if the battery level of the smart ring is 40%, and if the battery level of the wireless earphone case is 50%, the wearable electronic device 401 may display the first guide object 710, the second guide object 720, and the third guide object 730 in sequence on the first area of the first electronic device 402.

According to an embodiment, the wearable electronic device 401 may preferentially display, on the first area, a virtual guide object corresponding to an external electronic device that is worn on the user last, and later display, on the first area, a virtual guide object corresponding to an external electronic device that is worn on the user first.

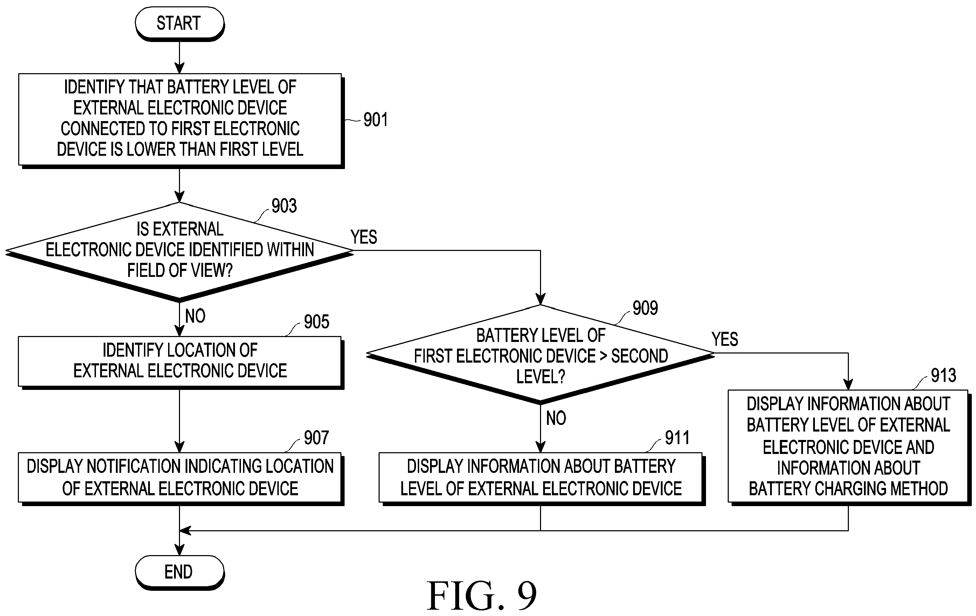

FIG. 9 is a flowchart illustrating a method in which a wearable electronic device displays information including a notification if it is identified that the battery level of a second external electronic device is lower than a specified first level according to an embodiment.

Referring to FIG. 9, according to an embodiment, in operation 901, a wearable electronic device (e.g., the wearable electronic device 401 in FIG. 5) may identify that the battery level of an external electronic device (e.g., the second external electronic device 404 in FIG. 5), connected to a first electronic device (e.g., the first electronic device 402 in FIG. 5) using wireless communication technology, is lower than a specified first level. For example, the first level may be a value indicating that the battery level is low (e.g., 5% or 15%).

According to an embodiment, in operation 903, the wearable electronic device 401 may determine whether or not an external electronic device is identified within the field of view. For example, the field of view may indicate a range captured by a camera (e.g., the camera 410 in FIG. 5) and displayed on a display (e.g., the display 440 in FIG. 5). Alternatively, the field of view may represent the user's viewing range if the wearable electronic device 401 is implemented as AR glasses.

According to an embodiment, if it is determined that the external electronic device is not identified in the field of view ("NO" in operation 903), the wearable electronic device 401 may identify the location of the external electronic device 404 in operation 905. For example, the wearable electronic device 401 may obtain information about the location of the external electronic device 404 from the first electronic device 402. Alternatively, if the external electronic device 404 supports UWB communication, the wearable electronic device 401 may identify the location of the external electronic device 404 using UWB communication.

According to an embodiment, in operation 907, the wearable electronic device 401 may display a notification indicating the location of the external electronic device 404 using the display 440. For example, the notification may be displayed using a virtual object. For example, the notification may include information indicating the location of the external electronic device 404 relative to the location of the wearable electronic device 401.

According to an embodiment, if it is determined that an external electronic device is identified in the field of view ("YES" in operation 903), the wearable electronic device 401 may identify whether or not the battery level of the first electronic device 402 is greater than a specified second level in operation 909. For example, the second level may be a value (e.g., 50%) indicating the battery level sufficient for the first electronic device 402 to share power with the external electronic device.

According to an embodiment, if it is identified that the battery level of the first electronic device 402 is not greater than the specified second level ("NO" in operation 909), the wearable electronic device 401 may display information about the battery level of the external electronic device 404 in operation 911. For example, the information about the battery level of the external electronic device 404 may be displayed using a virtual object.

According to an embodiment, if it is determined that the battery level of the first electronic device 402 is greater than the specified second level ("YES" in operation 909), the wearable electronic device 401 may display information about the battery level of the external electronic device 404 and information about a battery charging method using the first electronic device 402 in operation 913. For example, the information may be displayed using virtual objects. In addition, the information about the battery charging method may also include a control menu for activating the first function for wireless power sharing of the first electronic device 402. For example, based on a user input to the control menu, the wearable electronic device 401 may transmit, to the first electronic device 402, a command to cause the first electronic device 402 to activate the first function.

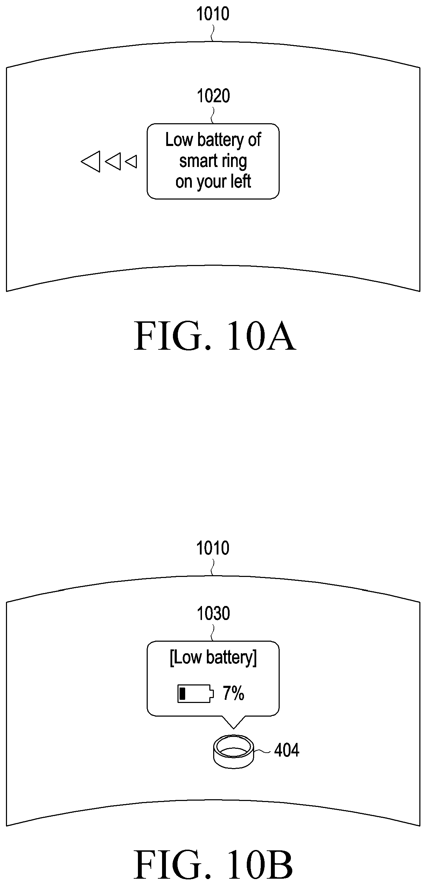

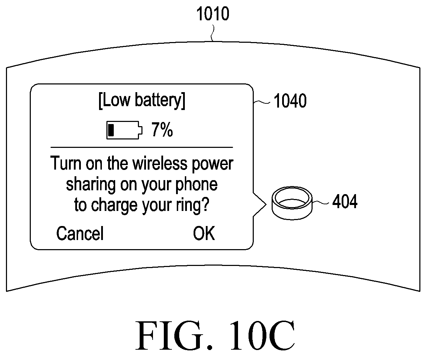

FIGS. 10A, 10B, and 10C are diagrams illustrating a method in which a wearable electronic device displays information including a notification if it is identified that the battery level of an external electronic device is lower than a specified first level according to an embodiment.

Referring to FIGS. 10A, 10B, and 10C, a wearable electronic device (e.g., the wearable electronic device 401 in FIG. 5) may identify that the battery level of a second external electronic device (e.g., the second external electronic device 404 in FIG. 5), connected to a first electronic device (e.g., the first electronic device 402 in FIG. 5) using wireless communication technology, is lower than a specified first level (e.g., 5% or 15%).

According to an embodiment, the wearable electronic device 401 may determine whether or not the second external electronic device is identified in the field of view.

Referring to FIG. 10A, according to an embodiment, if it is determined that the second external electronic device is not identified in the field of view, the wearable electronic device 401 may identify the location of the second external electronic device 404. The wearable electronic device 401 may display a virtual notification indicating the location of the second external electronic device 404 on a screen 1010 displayed through the display 440. For example, the notification may include information (e.g., an arrow object) indicating the location of the second external electronic device 404 relative to the location of the wearable electronic device 401.

Referring to FIG. 10B, according to an embodiment, if it is determined that the second external electronic device is identified in the field of view, the wearable electronic device 401 may display information 1030 about the battery level of the external electronic device 404 on the screen 1010 displayed through the display 440. For example, the information may be displayed using a virtual object. For example, the information 1030 about the battery level may include a value indicating the amount of power currently stored in the battery of the second external electronic device 404. In addition, the information 1030 about the battery level may further include information (e.g., a message) indicating that charging is necessary.

According to an embodiment, the wearable electronic device 401 may display information 1030 about the battery level if it is identified that the first electronic device 402 is in the state in which it is difficult to wirelessly share power. For example, the state in which it is difficult for the first electronic device 402 to wirelessly share power may be the state in which the battery level of the first electronic device 402 is not greater than the specified second level. Alternatively, if the state in which the second external electronic device 404 is able to be charged using a dedicated charger is identified, the wearable electronic device 401 may display the information 1030 about the battery level. At this time, the wearable electronic device 401, based on identifying a dedicated charger around the second external electronic device 404 using the camera 410, may identify the state in which the second external electronic device 404 is able to be charged using the dedicated charger.

Referring to FIG. 10C, according to an embodiment, if it is determined that the second external electronic device is identified in the field of view, the wearable electronic device 401 display information 1040 about the battery level of the second external electronic device 404 and a battery charging method on the screen 1010 displayed through the display 440. For example, the information may be displayed using a virtual object. In addition, the information 1040 about the battery charging method may include a control menu for activating the first function for wireless power sharing of the first electronic device 402. For example, based on a user input (e.g., an input to an object indicating OK) to the control menu, the wearable electronic device 401 may transmit, to the first electronic device 402, a command to cause the first electronic device 402 to activate the first function.

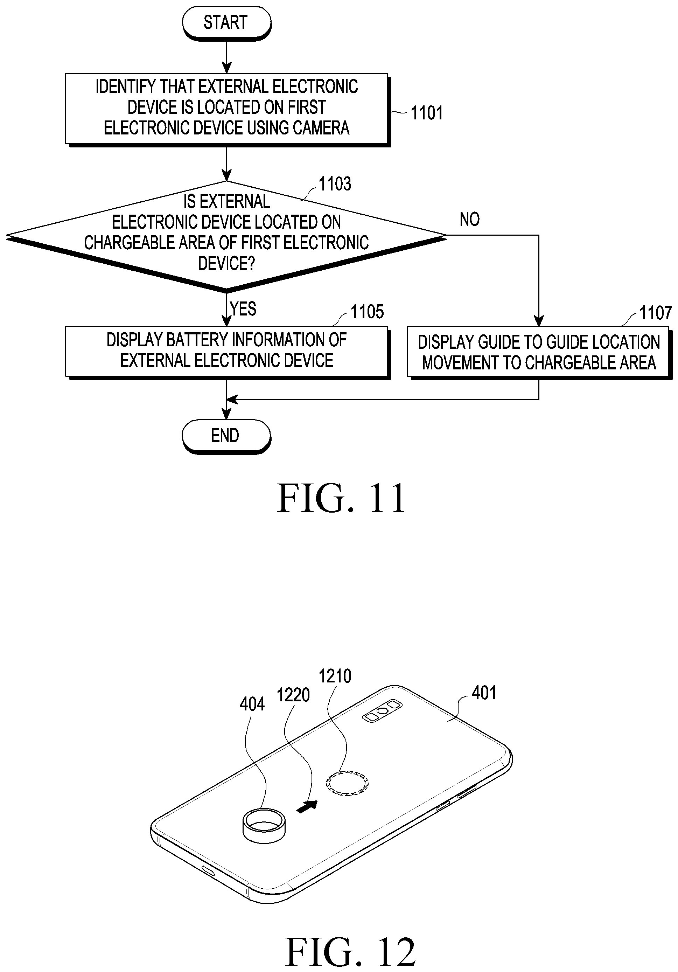

FIG. 11 is a flowchart illustrating a method in which a wearable electronic device displays a guide indicating location movement of a first external electronic device, based on whether or not the first external electronic device is located on a chargeable area of a first electronic device, according to an embodiment.

Referring to FIG. 11, according to an embodiment, in operation 1101, a wearable electronic device (e.g., the wearable electronic device 401 in FIG. 5) may identify that a first external electronic device (e.g., the first external electronic device 403 in FIG. 5) to receive power is located on the first electronic device (e.g., the first electronic device 402 in FIG. 5) using a camera (e.g., the camera 410 in FIG. 5). According to an embodiment, the wearable electronic device 401 may identify that the first external electronic device 403 is located on the first electronic device 402 to receive power. For example, the first external electronic device 403 may be located on the first electronic device 402 to perform a charging operation.

According to an embodiment, in operation 1103, the wearable electronic device 401 may identify whether or not the first external electronic device 403 is located on the chargeable area of the first electronic device 402.

According to an embodiment, if it is identified that the first external electronic device 403 is located on the chargeable area of the first electronic device 402 ("YES" in operation 1103), the wearable electronic device 401 may display battery information (e.g., information indicating the battery level) of the first external electronic device in operation 1105. For example, if the first external electronic device 403 is located on the chargeable area of the first electronic device 402, the first electronic device 402 may wirelessly transmit power to the first external electronic device 403. The wearable electronic device 401 may obtain battery information of each of the first electronic device 402 and the first external electronic device 403 from the first electronic device 402. In addition, the wearable electronic device 401 may display battery information of each of the first electronic device 402 and the first external electronic device 403 as virtual objects (e.g., a virtual window). For example, the battery information (e.g., a value indicating the battery level) may vary in real time or periodically as charging progresses.

According to an embodiment, if it is identified that the first external electronic device 403 is not located on the chargeable area of the first electronic device 402 ("NO" in operation 1103), the wearable electronic device 401 may display a guide for guiding the location movement of the first external electronic device 403 to the chargeable area using a display (e.g., the display 440 in FIG. 5) in operation 1107. For example, a guide may be implemented as a virtual object. For example, the guide may include a virtual object (e.g., a representative image of a smartwatch) corresponding to the first external electronic device 403 at a location where the first external electronic device 403 is to move. In addition, the guide may include a virtual object (e.g., an arrow) indicating a direction in which the first external electronic device 403 is to move.

FIG. 12 is a diagram illustrating a method in which a wearable electronic device displays a guide indicating location movement of a first external electronic device, based on whether or not the first external electronic device is located on a chargeable area of a first electronic device, according to an embodiment.

Referring to FIG. 12, according to an embodiment, the wearable electronic device 401 may identify whether or not the second external electronic device 404 is located on the chargeable area of the first electronic device 402.

According to an embodiment, if it is identified that the second external electronic device 404 is not located on the chargeable area of the first electronic device 402, the wearable electronic device 401 may display at least one guide 1210 and/or 1220 that guides the location movement of the second external electronic device 404 to the chargeable area using a display (e.g., the display 440 in FIG. 5). For example, the guide 1210 and/or 1220 may provide a first virtual image 1210 (e.g., an image of a smart ring) representing the second external electronic device 403 at a location where the second external electronic device 404 is to move. In addition, the guide 1210 and/or 1220 may include a second virtual image 1220 (e.g., an arrow) indicating a direction in which the second external electronic device 404 is to move. For example, the second image 1220 may be displayed between the second external electronic device 404 and the first image 1210.

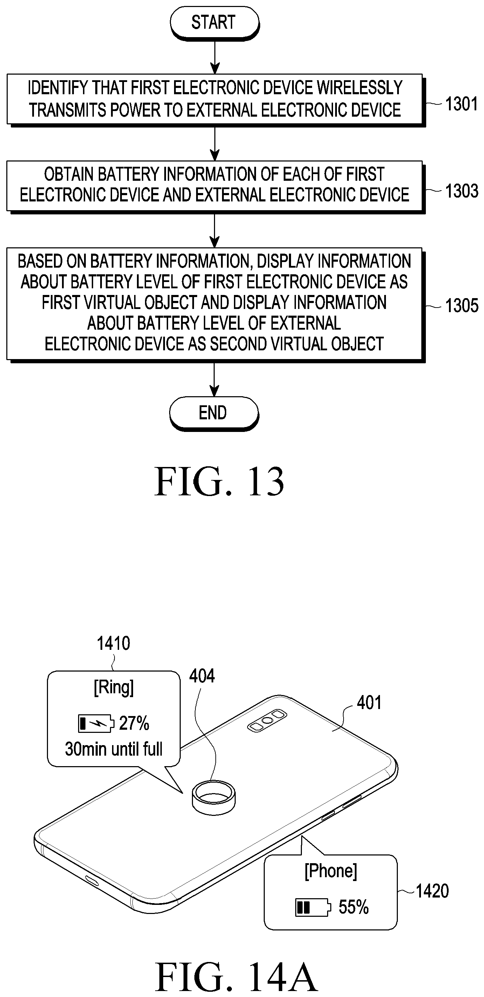

FIG. 13 is a flowchart illustrating a method in which a wearable electronic device displays battery information about each of a first electronic device and a first external electronic device while the first electronic device is charging the first external electronic device according to an embodiment.

Referring to FIG. 13, according to an embodiment, in operation 1301, a wearable electronic device (e.g., the wearable electronic device 401 in FIG. 5) may identify that a first electronic device (e.g., the first electronic device 402 in FIG. 5) wirelessly transmits power to a first external electronic device (e.g., the first external electronic device 403 in FIG. 5). For example, the wearable electronic device 401 may identify that the first electronic device 402 is transmitting power to the first external electronic device 403 through a communication connection with the first electronic device 402. For example, the first external electronic device may be performing a charging operation based on a power sharing function of the first electronic device.

According to an embodiment, in operation 1303, the wearable electronic device 401 may obtain battery information of each of the first electronic device 402 and the first external electronic device 403 through the communication connection with the first electronic device 402. For example, the wearable electronic device 401 may obtain battery information of each of the first electronic device 402 and the first external electronic device 403 in real time or periodically.

According to an embodiment, in operation 1305, based on the battery information, the wearable electronic device 401 display, using a display (e.g., the display 440 in FIG. 5), information about the battery level of the first electronic device 402 as a first virtual object and display information about the battery level of the first external electronic device 403 as a second virtual object.

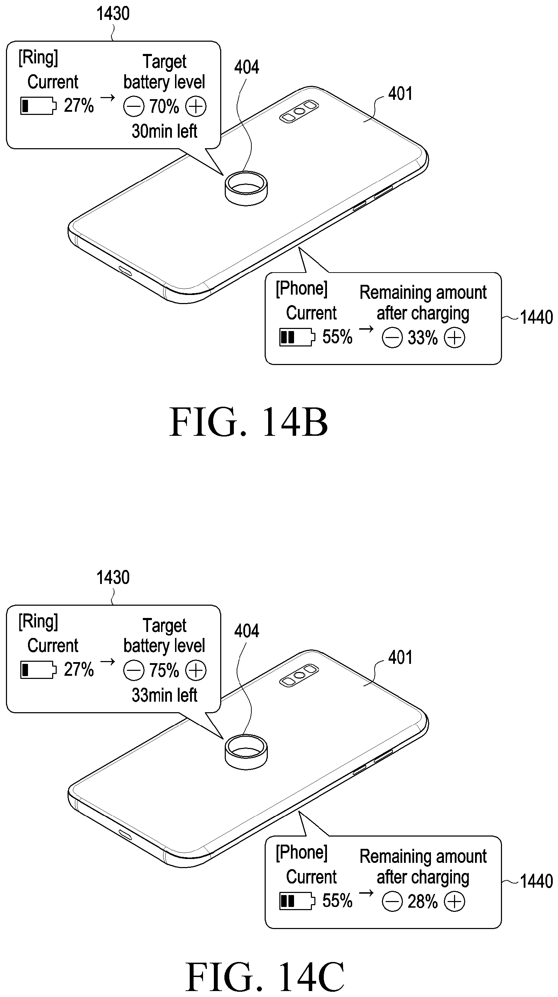

FIGS. 14A, 14B, and 14C are diagrams illustrating a method in which a wearable electronic device displays battery information about each of a first electronic device and a first external electronic device while the first electronic device is charging the first external electronic device according to an embodiment.

Referring to FIGS. 14A, 14B, and 14C, according to an embodiment, a wearable electronic device (e.g., the wearable electronic device 401 in FIG. 5) may identify that the first electronic device 402 is wirelessly transmitting power to the second external electronic device 404. The wearable electronic device 401 may obtain battery information of each of the first electronic device 402 and the second external electronic device 404 in real time or periodically through a communication connection with the first electronic device 402.

Referring to FIG. 14A, according to an embodiment, the wearable electronic device 401 may display information about the battery level of the first external electronic device 403 as a virtual object 1410 (e.g., a virtual window screen) using a display (e.g., the display 440 in FIG. 5). For example, the virtual object 1410 may include information about a value (e.g., 27%) indicating the battery level of the first external electronic device 403. In addition, the virtual object 1410 may include information (e.g., 30 minutes) about the time required for the first external electronic device 403 to reach the target battery level (e.g., fully charged state). For example, as charging progresses, the value representing the battery level of the first external electronic device 403 and the time required to reach the target battery level may vary (e.g., the value may increase and the time may decrease).

According to an embodiment, the wearable electronic device 401 may display information about the battery level of the first electronic device 402 as a virtual object 1420 (e.g., a virtual window screen). For example, the virtual object 1420 may include information about a value (e.g., 27%) representing the battery level of the first electronic device 402. For example, as charging progresses, the value representing the battery level of the first electronic device 402 may vary (e.g., decrease).

Referring to FIGS. 14B and 14C, according to an embodiment, the wearable electronic device 401 may display a virtual object 1430 including information about the battery level of the first external electronic device 403 and a first control menu capable of adjusting the target battery level of the first external electronic device 403. For example, the first control menu may include a first control object (e.g., + object) for increasing the target battery level of the first external electronic device 403 and a second control object (e.g., - object) for reducing the target battery level.

Referring to FIGS. 14B and 14C, according to an embodiment, the wearable electronic device 401 may also display a virtual object 1440 including information about the battery level of the first electronic device 403 and a second control menu capable of adjusting the remaining amount (e.g., the remaining battery level) of the first electronic device 403 after charging. For example, the second control menu may include a third control object (e.g., + object) for increasing the remaining amount of the first electronic device 402 after charging and a fourth control object (e.g., - object) for reducing the remaining amount after charging.

According to an embodiment, the wearable electronic device 401, based on a user input to the first control object, may transmit a control command to increase the target battery level of the first external electronic device 403 to the first electronic device 402. Referring to FIG. 14C, the wearable electronic device 401 may display a virtual object 1430 reflecting the adjusted target battery level. At this time, as the target battery level changes (e.g., 70% → 75%), the time required to reach the target battery level of the first external electronic device 403 may vary (e.g., 33 minutes → 30 minutes). In addition, based on the adjusted target battery level, information about the remaining amount of the first electronic device 402 after charging, which is included in the virtual object 1440, may also vary (e.g., 33% → 28%).

According to an embodiment, the wearable electronic device 401, based on a user input to the fourth control object, may transmit a control command to reduce the remaining amount of the first electronic device 402 after charging to the first electronic device 402. Referring to FIG. 14C, the wearable electronic device 401 may display a virtual object 1440 reflecting the adjusted remaining amount after charging. At this time, as the remaining amount after charging changes (e.g., 33% → 28%), the time required to reach the target battery level of the first external electronic device 403 may vary (e.g., 33 minutes → 30 minutes). In addition, based on the adjusted remaining amount after charging, information about the target battery level of the first external electronic device 403, which is included in the virtual object 1430, may also vary (e.g., 70% → 75%).

According to an embodiment, the target battery level of the first external electronic device 403 and the remaining amount of the first electronic device after charging may be inversely proportional to each other.

According to an embodiment, the first electronic device 402 may not transmit power to the first external electronic device 403 after charging the first external electronic device 403 to the target battery level. For example, the first electronic device 402 may charge the first external electronic device 403 to the target battery level and then deactivate the first function of wirelessly transmitting power.

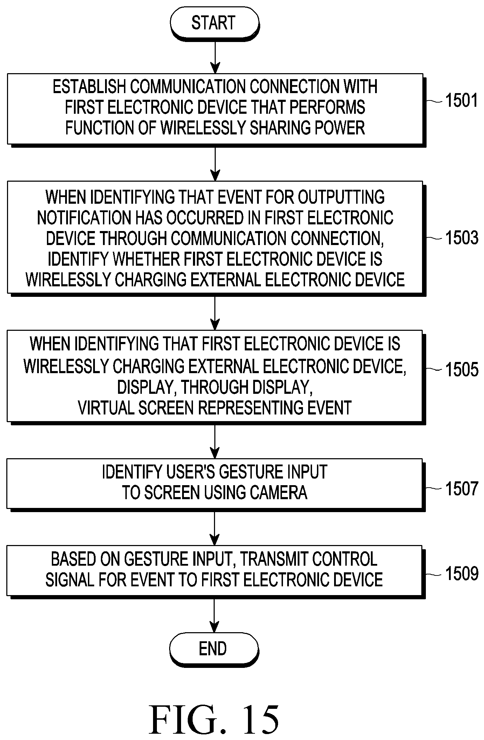

FIG. 15 is a flowchart illustrating a method in which a wearable electronic device processes an event occurring in a first electronic device while the first electronic device is charging a first external electronic device according to an embodiment.

Referring to FIG. 15, according to an embodiment, in operation 1501, a wearable electronic device (e.g., wearable electronic device 401 in FIG. 5) may establish a communication connection with a first electronic device (e.g., the first electronic device 402 in FIG. 5) that performs a function of wirelessly sharing power. For example, the communication connection may be performed using short-range wireless communication technology.

Meanwhile, if the communication connection between the wearable electronic device 401 and the first electronic device 402 is already established, operation 1501 may be omitted.

According to an embodiment, the wearable electronic device 401 may identify that an event for outputting a notification has occurred in the first electronic device 402 through the communication connection. For example, the notification may be a notification using visual, auditory, and/or tactile means. For example, the event may include a call reception event, an alarm event, a message reception event, and/or an external electronic device detection event.

According to an embodiment, in operation 1503, if it is identified that an event for outputting a notification has occurred in the first electronic device 402 through the communication connection, the wearable electronic device 401 may identify whether or not the first electronic device 402 is wirelessly charging an external electronic device (e.g., the first external electronic device 403 in FIG. 5).

According to an embodiment, in operation 1505, if it is identified that the first electronic device 402 is wirelessly charging the external electronic device 403, the wearable electronic device 401 may display, through a display (e.g., the display 440 in FIG. 5), a virtual screen representing the event. For example, the virtual screen may correspond to a screen to be displayed on the first electronic device 403.

According to an embodiment, in operation 1507, the wearable electronic device 401 may identify a user's gesture input to the virtual screen using a camera (e.g., the camera 410 in FIG. 5).

According to an embodiment, in operation 1509, the wearable electronic device 401, based on the gesture input, may transmit a control signal for the event to the first electronic device 402. For example, the control signal may include a signal for controlling a function for the event, which is performed by the first electronic device 402.

According to an embodiment, if it is identified that the first electronic device 402 is wirelessly charging the external electronic device 403, the wearable electronic device 401 may output at least one of a vibration, a sound, or a screen corresponding to the event. The wearable electronic device 401 may provide notification of the event through a speaker, a vibrator, and/or the display 440 included in the wearable electronic device 401.

According to an embodiment, the wearable electronic device 401 may transmit a command to prevent the first electronic device 402 from outputting a notification of the event to the first electronic device 403 through the communication connection.

Through this, the wearable electronic device 401 may control or process the function for the event of the first electronic device 402 therein. In addition, the first electronic device 402 may stably charge the external electronic device 403 without outputting a notification of the event.

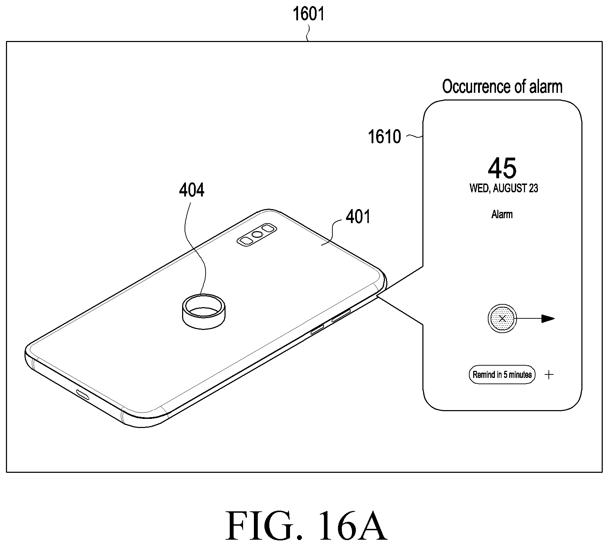

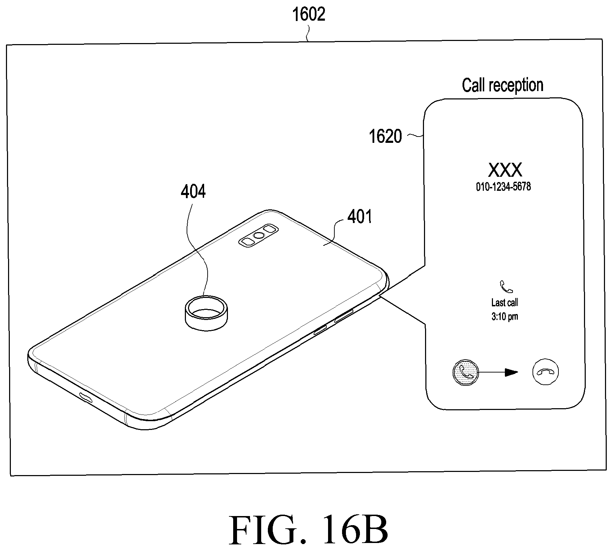

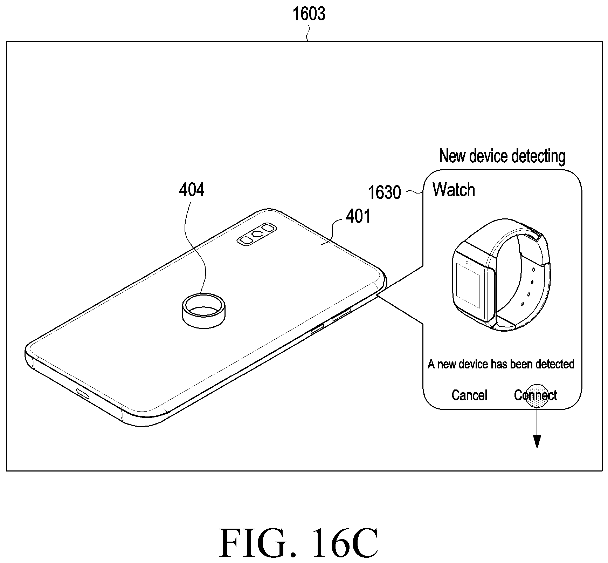

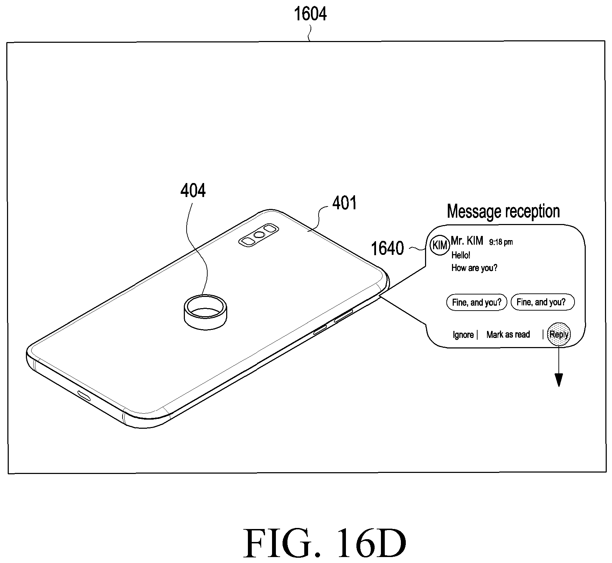

FIGS. 16A, 16B, 16C, and 16D are diagrams illustrating a method in which a wearable electronic device processes an event occurring in a first electronic device while the first electronic device is charging a first external electronic device according to an embodiment.

Referring to FIGS. 16A, 16B, 16C, and 16D, according to an embodiment, the wearable electronic device 401 may display a virtual screen 1610, 1620, 1630, or 1640 corresponding to a screen to be displayed on the first electronic device 402 in relation to an event that occurs in the first electronic device 402 using a display (e.g., the display 440 in FIG. 5). For example, the wearable electronic device 401 may display a virtual screen 1610, 1620, 1630, or 1640 on the entire screen 1601, 1602, 1603, or 1604 including the first electronic device 402 captured by a camera (e.g., the camera 410 in FIG. 5). For example, the wearable electronic device 401 may display the virtual screen 1610, 1620, 1630, or 1640 near or on the first electronic device 402.

Referring to FIG. 16A, according to an embodiment, an event occurring in the first electronic device 403 may be an alarm event. The wearable electronic device 401 may display a first screen 1610 corresponding to the alarm event using the display 440.

According to an embodiment, if it is identified that an alarm event has occurred in the first electronic device 402, the wearable electronic device 401 may display the first screen 1610 through the display 440. According to an embodiment, the wearable electronic device 401 may output sound or vibration corresponding to the alarm through a speaker or vibrator. The first screen 1610 may include a control object for controlling the alarm event.

According to an embodiment, the wearable electronic device 401 may identify a user's gesture input to the first screen 1610 (or a control object included in the first screen 1610). For example, the wearable electronic device 401 may cancel the alarm, based on the gesture input. In addition, if the alarm is canceled, the wearable electronic device 401 may transmit information indicating that the alarm has been canceled to the first electronic device 402. Alternatively, the wearable electronic device 401 may transmit a control signal instructing to cancel the alarm to the first electronic device 402.

Referring to FIG. 16B, according to an embodiment, the event occurring in the first electronic device 403 may be a call reception event. The wearable electronic device 401 may display a second screen 1620 corresponding to the call reception event using the display 440.

According to an embodiment, the wearable electronic device 401 may identify a user's gesture input to the second screen 1620 (or control objects included in the second screen 1620). For example, based on the gesture input, the wearable electronic device 401 may connect a phone call received by the first electronic device 403 (e.g., reception of a call). Alternatively, based on the gesture input, the wearable electronic device 401 may not connect the phone call received by the first electronic device 403 (e.g., rejection of a call). The wearable electronic device 401 may transmit a control signal corresponding to the gesture input (e.g., a control signal indicating reception or rejection of a call) to the first electronic device 402.

According to an embodiment, the wearable electronic device 401, after the phone call received by the first electronic device 403 is connected, may transmit user's voice information obtained using a microphone included in the wearable electronic device 401 to the first electronic device 402. In addition, the wearable electronic device 401 may output voice information of the other party in the call reception event received from the first electronic device 402 through a speaker included in the wearable electronic device 401. Through this, the wearable electronic device 401 may control or process the call reception event occurring in the first electronic device 402. That is, the user of the wearable electronic device 401 may make a phone call with the other party of the call reception event using the wearable electronic device 401.

Referring to FIG. 16C, according to an embodiment, an event occurring in the first electronic device 403 may be an external electronic device detection event. The wearable electronic device 401 may display a third screen 1630 corresponding to the external electronic device detection event using the display 440.

According to an embodiment, if it is identified that an external electronic device detection event has occurred in the first electronic device 402, the wearable electronic device 401 may display a third screen 1630 through the display 440. According to an embodiment, the wearable electronic device 401 may output sound or vibration corresponding to the event through a speaker or vibrator. The third screen 1630 may include control objects for controlling connection with the detected external electronic device.

According to an embodiment, the wearable electronic device 401 may identify a user's gesture input to the third screen 1630 (or control objects included in the third screen 1610). For example, the wearable electronic device 401, based on the gesture input, may connect the detected external electronic device and the first electronic device 403. Alternatively, the wearable electronic device 401, based on the gesture input, may not connect the detected external electronic device and the first electronic device 403. The wearable electronic device 401 may transmit a control signal corresponding to the gesture input (e.g., a control signal indicating connection permission or connection disallowance) to the first electronic device 402.

Referring to FIG. 16D, according to an embodiment, the event occurring in the first electronic device 403 may be a message reception event. The wearable electronic device 401 may display a fourth screen 1640 corresponding to the message reception event using the display 440.

According to an embodiment, the wearable electronic device 401 may identify a user's gesture input to the fourth screen 1640 (or control objects included in the fourth screen 1640). For example, the wearable electronic device 401, based on the gesture input, may transmit a reply message to the message received by the first electronic device 403 (e.g., message transmission). Alternatively, the wearable electronic device 401, based on the gesture input, may not transmit a reply message to the message received by the first electronic device 403 (e.g., reply rejection). The wearable electronic device 401 may transmit a control signal corresponding to the gesture input (e.g., a control signal indicating message transmission or message transmission rejection) to the first electronic device 402.

According to an embodiment, the wearable electronic device 401 may transmit a control signal indicating transmission of a reply message to the first electronic device 403 and then display a screen for writing a reply message. The wearable electronic device 401 may enter text or attach content to the screen for writing a reply message and then transmit a reply message to the other party's electronic device. At this time, the wearable electronic device 401 may transmit a control signal for transmitting a reply message to the first electronic device. Through this, the wearable electronic device 401 may control or process the message reception event occurring in the first electronic device 402. That is, the user of the wearable electronic device 401 may transmit a message to the other party of the message reception event using the wearable electronic device 401.

According to an embodiment, a wearable electronic device configured to be worn on a head of a user may include a camera, a communication circuit, a display, memory, including one or more storage media, storing instructions, and at least one processor including processing circuitry. According to an embodiment, the instructions, when executed by the at least one processor individually or collectively, may cause the wearable electronic device to establish, using the communication circuit, a communication connection with a first external electronic device. According to an embodiment, the instructions, when executed by the at least one processor individually or collectively, may cause the wearable electronic device to obtain first information about a chargeable location of the first external electronic device capable performing a wireless power sharing function. According to an embodiment, the instructions, when executed by the at least one processor individually or collectively, may cause the wearable electronic device to identify a second external electronic device to be wirelessly charged through the first external electronic device. According to an embodiment, the instructions, when executed by the at least one processor individually or collectively, may cause the wearable electronic device to obtain, through the camera, a video image of a physical surrounding environment. According to an embodiment, the instructions, when executed by the at least one processor individually or collectively, may cause the wearable electronic device to identify the chargeable location of the first external electronic device, based on the first information, from the video image. According to an embodiment, the instructions, when executed by the at least one processor individually or collectively, may cause the wearable electronic device to display, through the display, a first virtual guide object corresponding to the chargeable location of the first external electronic device with the video image.

According to an embodiment, the instructions, when executed by the at least one processor individually or collectively, may cause the wearable electronic device to identify a type of a second external electronic device 403, 404, or 405 to be wirelessly charged through the first external electronic device. According to an embodiment, the instructions, when executed by the at least one processor individually or collectively, may cause the wearable electronic device to determine a shape of the first virtual guide object based on the type of the second external electronic device.

According to an embodiment, the instructions, when executed by the at least one processor individually or collectively, may cause the wearable electronic device to identify, using the communication connection, battery levels of a plurality of external electronic devices connected to the first external electronic device. According to an embodiment, the instructions, when executed by the at least one processor individually or collectively, may cause the wearable electronic device to sequentially display, through the display, a plurality of virtual guide objects representing the plurality of external electronic devices in the chargeable location of the first external electronic device, based on the battery levels.

According to an embodiment the instructions, when executed by the at least one processor individually or collectively, may cause the wearable electronic device to identify, using the communication connection, whether the first external electronic device has activated a wireless power sharing function for wirelessly transmitting power. According to an embodiment, the instructions, when executed by the at least one processor individually or collectively, may cause the wearable electronic device to identify the second external electronic device to be charged through the first external electronic device if it is identified that the wireless power sharing function is activated.

According to an embodiment, the instructions, when executed by the at least one processor individually or collectively, may cause the wearable electronic device to identify, using the communication connection, battery information of the second external electronic device. According to an embodiment, the instructions, when executed by the at least one processor individually or collectively, may cause the wearable electronic device to identify, using the camera, the second external electronic device if it is identified that the battery level of the second external electronic device is lower than a specified first level based on the battery information.

According to an embodiment, the instructions, when executed by the at least one processor individually or collectively, may cause the wearable electronic device to identify the location of the second external electronic device if the second external electronic device is not identified using the camera. According to an embodiment, the instructions, when executed by the at least one processor individually or collectively, may cause the wearable electronic device to display guide information indicating the location of the second external electronic device through the display.

According to an embodiment, the instructions, when executed by the at least one processor individually or collectively, may cause the wearable electronic device to display, through the display, information about the battery level of the second external electronic device if the second external electronic device is identified using the camera.

According to an embodiment, the instructions, when executed by the at least one processor individually or collectively, may cause the wearable electronic device to display, through the display, a control menu for activating the wireless power sharing function if it is identified that the battery level of the first external electronic device is higher than a specified second level and that the first external electronic device has deactivated the wireless power sharing function of transmitting power wirelessly.

According to an embodiment, the instructions, when executed by the at least one processor individually or collectively, may cause the wearable electronic device to identify, using the camera, whether the second external electronic device is located in the chargeable location of the first external electronic device if it is identified that the second external electronic device is located on the first external electronic device. According to an embodiment, the instructions, when executed by the at least one processor individually or collectively, may cause the wearable electronic device to display a guide to guide movement to the chargeable location through the display if it is identified that the first external electronic device is not located in the chargeable location.

According to an embodiment, the instructions, when executed by the at least one processor individually or collectively, may cause the wearable electronic device to obtain battery information of each of the first external electronic device and the second external electronic device through the communication connection if it is identified that the first external electronic device wirelessly transmits power to the second external electronic device. According to an embodiment, the instructions, when executed by the at least one processor individually or collectively, may cause the wearable electronic device to display, based on the battery information, information about the battery level of the first external electronic device as a first virtual object and information about the battery level of the second external electronic device as a second virtual object through the display.

According to an embodiment, a method of operating a wearable electronic device 401 configured to be worn on a head of a user may include establishing a communication connection with a first external electronic device 402. According to an embodiment, the method of operating a wearable electronic device may include obtaining first information about a chargeable location 407 of the first external electronic device capable performing a wireless power sharing function. According to an embodiment, the method of operating a wearable electronic device may include identifying a second external electronic device 403, 404, or 405 to be wirelessly charged through the first external electronic device. According to an embodiment, the method of operating a wearable electronic device may include obtaining a video image of a physical surrounding environment through a camera 410 included in the wearable electronic device. According to an embodiment, the method of operating a wearable electronic device may include identifying, based on the first information, the chargeable location of the first external electronic device from the video image. According to an embodiment, the method of operating a wearable electronic device may include displaying, through a display 440 included in the wearable electronic device, a first virtual guide object corresponding to the chargeable location of the first external electronic device with the video image.

According to an embodiment, the method of operating a wearable electronic device may further include identifying a type of the second external electronic device 403, 404, or 405 to be wirelessly charged through the first external electronic device. According to an embodiment, the method of operating a wearable electronic device may further include determining a shape of the first guide object, based on the type of the second external electronic device.

According to an embodiment, the method of operating a wearable electronic device may further include identifying, using the communication connection, battery levels of a plurality of external electronic devices connected to the first external electronic device. According to an embodiment, the method of operating a wearable electronic device may further include sequentially displaying, through the display, a plurality of virtual guide objects representing the plurality of external electronic devices, based on the battery levels, in the chargeable location of the first external electronic device.

According to an embodiment, the method of operating a wearable electronic device may further include identifying, using the camera, whether or not the second external electronic device is located in the chargeable location when identifying that the second external electronic device is located on the first external electronic device. According to an embodiment, the method of operating a wearable electronic device may further include displaying a guide to guide movement to the chargeable location through the display when identifying that the second external electronic device is not located in the chargeable location.

According to an embodiment, the method of operating a wearable electronic device may further include obtaining battery information of each of the first external electronic device and the second external electronic device through the communication connection when identifying that the first external electronic device wirelessly transmits power to the second external electronic device. According to an embodiment, the method of operating a wearable electronic device may further include, based on the battery information, displaying, through the display, information about the battery level of the first external electronic device as a first virtual object and information about the battery level of the second external electronic device as a second virtual object.

According to an embodiment, a wearable electronic device configured to be worn on a head of a user may include a camera, a communication circuit, a display memory, including one or more storage media, storing instructions, and at least one processor including processing circuitry. According to an embodiment, the instructions, when executed by the at least one processor individually or collectively, may cause the wearable electronic device to establish a communication connection with a first external electronic device using the communication circuit. According to an embodiment, the instructions, when executed by the at least one processor individually or collectively, may cause the wearable electronic device to identify whether or not the first external electronic device is wirelessly charging a second external electronic device when identifying that an event for outputting a notification has occurred in the first external electronic device through the communication connection. According to an embodiment the instructions, when executed by the at least one processor individually or collectively, may cause the wearable electronic device to display, through the display, a virtual screen indicating the event when identifying that the first external electronic device is wirelessly charging the second external electronic device. According to an embodiment, the instructions, when executed by the at least one processor individually or collectively, may cause the wearable electronic device to identify a user's gesture input to the screen using the camera. According to an embodiment, the instructions, when executed by the at least one processor individually or collectively, may cause the wearable electronic device to transmit, based on the gesture input, a control signal for the event to the first external electronic device through the communication connection.

According to an embodiment, the instructions, when executed by the at least one processor individually or collectively, may cause the wearable electronic device to transmit a command to prevent the first external electronic device from outputting the notification to the first external electronic device through the communication connection.

According to an embodiment, the instructions, when executed by the at least one processor individually or collectively, may cause the wearable electronic device to output at least one of vibration or sound corresponding to the event when identifying that the first external electronic device is wirelessly charging the second external electronic device.

According to an embodiment, the instructions, when executed by the at least one processor individually or collectively, may cause the wearable electronic device to transmit user voice information obtained using a microphone included in the wearable electronic device to the first electronic device in response to a call reception event occurring in the first external electronic device. According to an embodiment, the instructions, when executed by the at least one processor individually or collectively, may cause the wearable electronic device to output, through a speaker included in the wearable electronic device, voice information of the other party of the call reception event received from the first electronic device.

According to an embodiment, a non-transitory computer-readable recording medium 130 or 230 may store instructions that enable a wearable electronic device 401 to establish a communication connection with a first external electronic device 402, the wearable electronic device to obtain first information about a chargeable location of the first external electronic device capable performing a wireless power sharing function, the wearable electronic device to identify a second external electronic device 403, 404, or 405 to be wirelessly charged through the first external electronic device, obtaining a video image of a physical surrounding environment through a camera included in the wearable electronic device, the wearable electronic device to identify, based on the first information, the chargeable location of the first external electronic device from the video image, and the wearable electronic device to display, through a display 440 included in the wearable electronic device, a first virtual guide object corresponding to the chargeable location of the first external electronic device with the video image.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (401) configured to be worn on a head of a user, the wearable electronic device comprising:
a camera (410);
a communication circuit (450);
a display (440);
memory(430), including one or more storage media, storing instructions; and
at least one processor(420) including processing circuitry,
wherein the instructions, when executed by the at least one processor individually or collectively, cause the wearable electronic device to:
establish, using the communication circuit, a communication connection with a first external electronic device (402),
obtain first information relating to a chargeable location (407) of the first external electronic device where the first external electronic device is capable performing a wireless power sharing function,
identify a second external electronic device (403, 404, 405) to be wirelessly charged via the first external electronic device,
obtain, via the camera, a video image of a surrounding physical environment,
identify, with respect to the video image, the chargeable location of the first external electronic device, based on the first information, and
display, through the display, a first virtual guide object corresponding to the chargeable location of the first external electronic device, with the video image.

2. The wearable electronic device of claim 1, wherein the instructions, when executed by the at least one processor individually or collectively, cause the wearable electronic device to:
identify a type of a second external electronic device (403, 404, 405) to be wirelessly charged via the first external electronic device, and
determine a shape of the first virtual guide object based on the type of the second external electronic device.

3. The wearable electronic device of any one of claims 1 to 2, wherein the instructions, when executed by the at least one processor individually or collectively, cause the wearable electronic device to:
identify, using the communication connection, battery levels of a plurality of external electronic devices connected to the first external electronic device, and
sequentially display, through the display, a plurality of virtual guide objects representing the plurality of external electronic devices on the chargeable location of the first external electronic device based on the battery levels.

4. The wearable electronic device of any one of claims 1 to 3, wherein the instructions, when executed by the at least one processor individually or collectively, cause the wearable electronic device to:
determine, using the communication connection, whether the first external electronic device has activated a wireless power sharing function for wirelessly transmitting power, and
identify the second external electronic device to be charged via the first external electronic device when identifying that the wireless power sharing function is activated.

5. The wearable electronic device of any one of claims 1 to 4, wherein the instructions, when executed by the at least one processor individually or collectively, cause the wearable electronic device to:
identify, using the communication connection, battery information of the second external electronic device, and
identify, using the camera, the second external electronic device when determining that a battery level of the second external electronic device is lower than a specified first level based on the battery information.

6. The wearable electronic device of any one of claims 1 to 5, wherein the instructions, when executed by the at least one processor individually or collectively, cause the wearable electronic device to:
when the second external electronic device is not identified using the camera, identify a location of the second external electronic device, and
display guide information indicating the location of the second external electronic device through the display.

7. The wearable electronic device of any one of claims 1 to 6, wherein the instructions, when executed by the at least one processor individually or collectively, cause the wearable electronic device to:
display, via the display, information about the battery level of the second external electronic device when the second external electronic device is identified using the camera.

8. The wearable electronic device of any one of claims 1 to 7, wherein the instructions, when executed by the at least one processor individually or collectively, cause the wearable electronic device to:
when it is identified that a battery level of the first external electronic device is higher than a specified second level and that the first external electronic device has deactivated the wireless power sharing function of transmitting power wirelessly, display, through the display, a control menu for activating the wireless power sharing function.

9. The wearable electronic device of any one of claims 1 to 8, wherein the instructions, when executed by the at least one processor individually or collectively, cause the wearable electronic device to:
identify, using the camera, whether the second external electronic device is located in the chargeable location of the first external electronic device, when identifying that the second external electronic device is located on the first external electronic device, and
display a guide to guide movement to the chargeable location through the display when identifying that the second external electronic device is not located on the chargeable location.

10. The wearable electronic device of any one of claims 1 to 9, wherein the instructions, when executed by the at least one processor individually or collectively, cause the wearable electronic device to:
obtain battery information of each of the first external electronic device and the second external electronic device through the communication connection, when identifying that the first external electronic device wirelessly transmits power to the second external electronic device, and
based on the battery information, display, through the display, information about the battery level of the first external electronic device as a first virtual object and information about the battery level of the second external electronic device as a second virtual object.

11. A method of operating a wearable electronic device (401) configured to be worn on a head of a user, the method comprising:
establishing a communication connection with a first external electronic device (402);
obtaining first information about a chargeable location (407) of the first external electronic device capable performing a wireless power sharing function;
identifying a second external electronic device (403, 404, or 405) to be wirelessly charged through the first external electronic device;
obtaining a video image of a physical surrounding environment through a camera (410) included in the wearable electronic device;
identifying, based on the first information, the chargeable location of the first external electronic device from the video image; and
displaying, through a display (440) included in the wearable electronic device, a first virtual guide object corresponding to the chargeable location of the first external electronic device with the video image.

12. The method of operating a wearable electronic device of claim 11, further comprising:
identifying a type of the second external electronic device (403, 404, or 405) to be wirelessly charged through the first external electronic device; and
determining a shape of the first guide object, based on the type of the second external electronic device.

13. The method of operating a wearable electronic device of any one of claims 11 to 12, further comprising:
identifying, using the communication connection, battery levels of a plurality of external electronic devices connected to the first external electronic device; and
sequentially displaying, through the display, a plurality of virtual guide objects representing the plurality of external electronic devices, based on the battery levels, in the chargeable location of the first external electronic device.

14. The method of operating a wearable electronic device of any one of claims 11 to 13, further comprising:
identifying, using the camera, whether or not the second external electronic device is located in the chargeable location when identifying that the second external electronic device is located on the first external electronic device; and
displaying a guide to guide movement to the chargeable location through the display when identifying that the second external electronic device is not located on the chargeable location.

15. A non-transitory computer-readable recording medium (130 or 230) storing instructions,
wherein the instructions, when executed by at least one processor individually or collectively, cause the wearable electronic device (401) to:
establish a communication connection with a first external electronic device (402);
obtain first information about a chargeable location (407) of the first external electronic device capable performing a wireless power sharing function;
identify a second external electronic device (403, 404, or 405) to be wirelessly charged through the first external electronic device;
obtain a video image of a physical surrounding environment through a camera included in the wearable electronic device;
identify, based on the first information, the chargeable location of the first external electronic device from the video image; and
display, through a display (440) included in the wearable electronic device, a first virtual guide object corresponding to the chargeable location of the first external electronic device with the video image.
